# EUROPÄISCHE PATENTANMELDUNG

(11) **EP 0 688 118 A2**
(43) Veröffentlichungstag der Anmeldung: **20.12.1995**
(21) Anmeldenummer: 95201447.0
(22) Anmeldetag: 02.06.1995
(51) Int. Cl.: H04L 12/18

(54) **Verfahren zur Vermittlung gruppenadressierter Datenblöcke in einem Netz**

(30) Priorität: 13.06.1994 CH 1858/94
(71) Anmelder: Alcatel STR AG, CH-8055 Zürich (CH)
(72) Erfinder: Hug, Werner, CH-8630 Rüti (CH)

(57) **Zusammenfassung**

In einem Breitband-Datennetz, bestehend aus Teilnetzen als Knoten und Netz-Netz-Verbindungen als Knotenverbindungen, ist es möglich, Protokoll-Informationseinheiten, sogenannte PDU, praktisch gleichzeitig an mehrerer Empfänger zu schicken, sofern diese als Gruppe definiert sind. Die Verteilung solch gruppenadressierter PDU, GAP, erfolgt unter Mitwirkung von Untergruppenadressenagenten, UGAA in den einzelnen Teilnetzen. Alle Knoten, die Benützeranschlüsse aufweisen, die zur Gruppe gehören, sind in einem Verbindungsbaum eingebunden. Die effiziente und sichere Verteilung einer GAP erfolgt über den Verbindungsbaum schrittweise nach einer repetitiven Vorschrift, die bewirkt, dass in jedem Knoten des Verbindungsbaums jeweils sämtliche zur Gruppe gehörenden Anschlüsse - Benützer oder benachbarte Knoten - eine Kopie der GAP erhalten, mit Ausnahme des Absenders. Zur Durchführung der Verteilung mit Datenformaten nach vereinbarten Protokollen sind den UGAA lokal eindeutige Nummern zugeteilt, die als Absenderidentifikation dienen. Die Nummer des absendenden UGAA wird jeweils an die Stelle im Kopf des ursprünglichen Datenblocks geschrieben, die keiner Integritätsprüfung unterliegt. Die für den Internetzverkehr wichtigen Informationen in der ersten Zelle eines Datenblocks sind durch den Verteilprozess nicht belastet, was den unmittelbaren Entscheid darüber ermöglicht, ob der ankommende Datenblock weiterzuleiten, zu bearbeiten oder zu verwerfen sei.

## Beschreibung

Die Erfindung liegt auf dem Gebiet der Vermittlung von Daten über Breitbandnetze und betrifft ein Verfahren zur Verteilung gruppenadressierter Datenblöcke gemäss dem Oberbegriff des Patentanspruchs 1.

In Breitband-Datennetzen werden die zu vermittelnden Daten in einem Netzknoten nach vorgegebenen Protokollen aufbereitet. Die fragmentierten Benützer-Daten werden mit Adressinformation und Diensteparametern versehen. Eine solcherart formatierte Protokoll-Informationseinheit, in der Fachsprache mit Protocol Data Unit, PDU, bezeichnet, besitzt unter anderem eine Quellen- und eine Zieladresse. Jeder derartige Datenblock wird individuell über eine Knotenverbindung des Netzes an einen nächsten Knoten gesandt. In diesem entscheidet sich auf Grund der mitgeführten Adresse bzw. der Diensteparameter, was mit der betreffenden PDU, der Protokoll-Informationseinheit, geschieht. Im häufigsten Fall wird sie an eine weitere Knotenverbindung oder an eine Endgerät-Schnittstelle ausgegeben; letztere besorgt die Regenerierung der Benützerdaten. Es besteht also keine reservierte Verbindung zwischen Quelle und Ziel während des Datenaustauschs. Ueber die physisch vorhandene Knotenverbindung können zeitlich gestaffelt Datenblöcke verschiedener Verbindungen laufen. Man spricht von einem verbindungslosen Breitband-Datendienst (Connectionless Broadband Data Service).

Diese Arbeitsweise ermöglicht es, bei geeigneter Vereinbarung über die Adressierung von einer Quelle aus praktisch gleichzeitig mehrere Senken mit den zu vermittelnden Daten zu bedienen, indem die PDU vervielfältigt werden. Ein entsprechend adressierter Datenblock wird also an eine Gruppe von Adressaten gesendet. Man spricht von einer gruppenadressierten Protokoll-Informationseinheit (group addressed PDU, GAP), im Gegensatz zur individuell adressierten. Eine Gruppenadresse steht stellvertretend für den Satz aller individuellen Adressen, der zur Gruppe gehörenden Teilnehmer. Für die Verbreitung solcher GAP an alle Empfänger der Gruppe gibt es verschiedene Möglichkeiten. Die eine sieht vor, jede GAP zunächst an einen zentralen Knoten zu leiten, wo sie kopiert, jede Kopie mit der individuellen Adresse des Gruppenmitglieds versehen und individuell verschickt wird; im zentralen Knoten werden auch die individuellen Adressen aller Gruppenmitglieder verwaltet. Eine andere sieht vor, die Gruppenadressen in den Teilnetzen, die das Breitbandnetz ausmachen, verteilt zu speichern. Jedes Teilnetz kennt die individuellen Adressen der eigenen Gruppenmitglieder und die benachbarten Teilnetze, in denen weitere Gruppenmitglieder angesiedelt sind. Eine ankommende GAP wird lokal und an die benachbarten Teilnetze verteilt; in letzteren wiederholt sich der Vorgang. Jede der Möglichkeiten hat ihre Stärken und Schwächen was die Geschwindigkeit, Netzbelastung, Fehlertoleranz, Veränderbarkeit und Verwaltung der Gruppen und so weiter angeht. Ein Verfahren mit Bündel-Gruppenadressierung ist eine Mischform der beiden angedeuteten Möglichkeiten, die bezüglich der Eigenschaften einen guten Kompromiss darstellt und daher bevorzugt verwendet wird.

Das Breitbandnetz besteht aus Teilnetzen, zum Beispiel den MAN (Metropolitan Area Network) der verschiedenen Netzbetreiber, die ihrerseit über Zweiwegverbindungen miteinander kommunizieren. Die Verbindungen können auch über sogenannte "Connectionless Server", CLS, verknüpft sein, Drehscheiben in Uebertragungsleitungen für die Weitergabe von Datenblöcken allein auf Grund derer Markierung. Für die nachfolgenden Betrachtungen werden solche CLS als einem Teilnetz zugehörig angesehen. Als Modell gesehen besteht das Netz aus Knoten (Teilnetze, CLS eingeschlossen) und Knotenverbindungen (Zweiweg-Uebertragungsleitungen). Eine Untermenge der Knotenverbindungen, über die alle Knoten des Netzes erreichbar sind, ohne dass eine Masche entsteht, wird "Spanning Tree" genannt. Die beteiligten Knotenverbindungen sind Aeste in einem Baum, die in den Knoten verzweigen. Ein willkürlich ausgewählter Knoten bildet den Stamm - erst daraus ergibt sich eine hierarchische Ordnung.

GAP (Gruppenadressierte Protokoll-Informationseinheiten), die von einer Quelle an einen Knoten gelangen, werden bei der Bündel-Gruppenadressierung von dort nur in Richtung gegen den Stammknoten weitergeleitet. Unterwegs jedoch werden in den einzelnen Teilnetzen, an die Gruppenempfänger angeschlossen sind, die GAP in der notwendigen Anzahl kopiert und an diese Empfänger weitergeleitet. Die Menge der von einem Teilnetz bedienten Gruppenempfänger wird Bündel-Gruppe genannt. Einer solchen Bündel-Gruppe wird eine Bündel-Gruppenadresse zugeteilt. Sie identifiziert das Teilnetz. Der Stammknoten stellt auf Grund vorliegender Informationen fest, welche Teilnehmer der Gruppe noch keine Kopie erhalten haben und übernimmt die Verteilung an diese restlichen Teilnehmer.

Die Anzahl voneinander unabhängiger Gruppen mit jeweils unterschiedlicher Zusammensetzung bezüglich der individuellen Teilnehmer ist nicht beschränkt. Die topographische Ansiedlung der Teilnehmer kann je nach Gruppe stark verschieden sein, so dass die Definition des Baums mit Vorteil angepasst wird. Der "Spanning Tree" ist also gruppenspezifisch. Es kann aber davon ausgegangen werden, dass er für jede festgelegte Gruppe definiert und zumindest im jeweiligen Stammknoten vollständig, in den übrigen Knoten soweit nötig, bekannt ist. Genauer zu betrachten ist hingegen noch die Information, auf Grund derer der Stammknoten zu entscheiden hat, welche Teilnehmer noch zu bedienen sind, erkennt er doch unmittelbar nur, von welchem Knoten die gruppenadressierte Informationseinheit angekommen ist, nicht jedoch, auf welchem Weg sie dorthin gelangte. Die GAP enthält zwar eine individuelle Quellenadresse, doch sagt diese in all jenen Fällen nichts Eindeutiges über den Weg aus, den die GAP zurückgelegt hat, in denen eine Quelle gesendet hat, die nicht Teilnehmer der Gruppe und deshalb dem Stammknoten unbekannt ist, was ausdrücklich erlaubt ist. Weiter ist zu beachten, dass für Internetzverbindungen, also den Datenverkehr über die Knotenverbindungen, das Protokoll ein Einkapseln der PDU vorsieht. Für die Behandlung eines in einem Knoten ankommenden Datenblocks steht daher zunächst einmal nur die Information zur Verfügung, die im Kapselkopf der gekapselten PDU steht. Es sollte möglich sein, allein auf Grund dieser Information zu bestimmen, was mit der PDU geschehen soll.

Das bisher bekannte Verfahren zur Bestimmung der Teilnehmer, die noch keine Kopie der GAP erhalten haben, die beim Stammknoten ankommt, sieht vor, die Absenderadresse der GAP im Kapselkopf auf ihrem Weg zum Stammknoten einmal zu verändern. Eine GAP weist ursprünglich immer eine individuelle Absenderadresse auf, die als solche gekennzeichnet ist. Einer GAP, die erstmals an ein Teilnetz gelangt, das Kopien herstellt und an die Empfänger der Bündel-Gruppe verteilt, und dem somit eine Bündel-Gruppenadresse zugeordnet ist, wird vor der Weitergabe an den benachbarten Knoten in Richtung des Stammknotens die Bündel-Gruppenadresse als Absenderadresse beigefügt. Ein nächstes Teilnetz kopiert und verteilt die GAP ebenfalls wie vorgesehen an die Bündel-Gruppe und an den nächsten Knoten Richtung Stammknoten, verändert aber die Absenderadresse nicht mehr. Der Stammknoten bestimmt aus der Bündel-Gruppenadresse, die auf das erstbehandelnde Teilnetz hinweist, und in Kenntnis des Baums, welche Teilnehmer der Gruppe bzw. welche Teilnetze noch nicht mit der GAP bedient wurden und veranlasst die Zustellung.

Beim bekannten Verfahren enthält also die gekapselte GAP, GAPe, im kapselnden Kopf als wesentliche Information die nächste Bündel-Gruppenadresse als Bestimmungsadresse und die Bündel-Gruppenadresse des Teilnetzes, das als erstes die GAP verarbeitet hat, als Absenderadresse. Diesen Adressen ist nicht zu entnehmen, von welcher Endgerät-Schnittstelle die ursprüngliche GAP stammt; die Information ist in der Absenderadresse der zweiten Zelle - im Kopf der ursprünglichen, nicht gekapselten GAP, GAPn - enthalten. Das Fehlen dieser Angabe in der ersten Zelle des Datenblocks verunmöglicht eine unmittelbare Entscheidung über eine allfällige Zurückweisung des Datenblocks, wenn keine Berechtigung zur Uebertragung vorliegt. Die Möglichkeit zur Zurückweisung gehört zum Dienst des "end-user blocking". Sie gehört zum Verteilprozess und sollte bei jeder Knotenverbindung gegeben sein. Der Verteilprozess sollte allein auf Grund der Information in der Kopfzelle eines Datenblocks erfolgen können ("on the fly process"). Am geschilderten Verfahren ist ferner nachteilig, dass die Verteilung in einem Ast zunächst nur in einer Richtung gegen den Stammknoten erfolgt, worauf die GAP entsprechend adressiert teilweise denselben Weg zurück kommen.

Es besteht daher die Aufgabe, ein Verfahren zur Vermittlung von gruppenadressierten Datenblöcken zu finden, das die Verteilung an die Gruppenmitglieder auf direkten Wegen vornimmt, ohne Mitglieder doppelt zu bedienen oder auszulassen, und es zudem erlaubt, bei der Bearbeitung der ersten Datenzelle eines Datenblocks zu entscheiden, ob er weiterzuleiten, zu bearbeiten oder zu verwerfen sei.

Die Verteilung erfolgt schrittweise nach einer repetitiven Vorschrift gemäss den kennzeichnenden Merkmalen des Patentanspruchs 1. Das Verfahren benützt in den Knoten des Netzes ausgewählte Netzelemente, die an der Verteilung der Datenblöcke beteiligt sind, in bekannter Art als Untergruppenadressenagenten. Zur Durchführung der Verteilung mit Datenformaten nach vereinbarten Protokollen sind den Untergruppenadressenagenten lokal eindeutige Nummern zugeteilt, die als Absenderidentifikation dienen. Die Nummer des absendenden UGAA wird jeweils an die Stelle im Kopf des ursprünglichen Datenblocks geschrieben, die keiner Integritätsprüfung unterliegt. Die für den Internetzverkehr wichtigen Informationen in der ersten Zelle eines Datenblocks sind durch den Verteilprozess nicht belastet, was den unmittelbaren Entscheid darüber ermöglicht, ob der ankommende Datenblock weiterzuleiten, zu bearbeiten oder zu verwerfen sei.

Die Erfindung ist nachstehend eingehender beschrieben und anhand folgender Figuren verdeutlicht:
- Figur 1:: Struktur eines Datenblocks mit einer GAPe;
- Figur 2:: Schema eines Breitbandnetzes mit einem Verbindungsbaum und der Knotennumerierung.

Die Vermittlung gruppenadressierter Datenblöcke erfolgt im Rahmen der vereinbarten Protokolle für den Datenaustausch. Eine Lösung für eine effiziente Verteilung von Datenblöcken an eine Gruppe muss den protokollarischen Gegebenheiten Rechnung tragen.

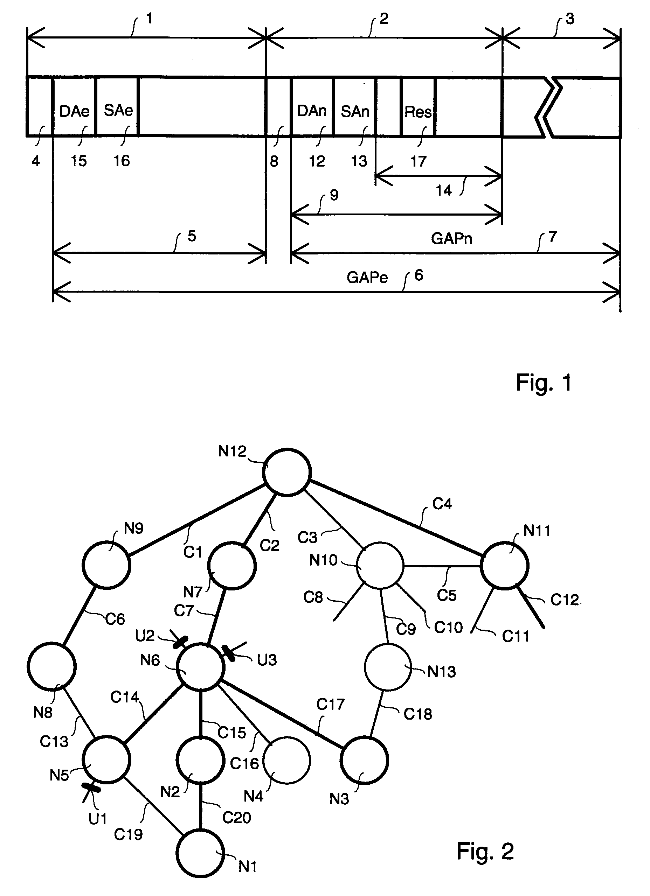

Die Figur 1 zeigt die Struktur eines Datenblocks mit einer gekapselten gruppenadressierten Protokoll-Informationseinheit GAPe. Dieser enthält eine erste Zelle 1 mit 44 Oktetten zu 8 Bit, eine gleich strukturierte zweite Zelle 2 und die Benützerdaten 3. Die erste Zelle enthält eine vier Oktett lange Zusatzinformation 4 und den Kapselkopf 5 der gekapselten gruppenadressierten Protokoll-Informationseinheit 6, GAPe. Daran schliesst die Zusatzinformation 8 der zweiten Zelle 2 an, auf den die nicht gekapselte gruppenadressierten Protokoll-Informationseinheit 7, GAPn, mit ihrem Kopf 9 und den Benützerdaten 3 folgt. Die PDU ist gemäss dem angewendeten Protokoll für die Fragmentierung der Daten aufgebaut und enthält im Kopf 9 ein Zieladressfeld 12, DAn, ein Quellenadressfeld 13, SAn, und Diensteparameterfelder 14. Ziel- und Quellenadressfeld haben das selbe Format; sie umfassen den Adresstyp mit vier Bit und die eigentliche Adresse mit 60 Bit. Der Aufbau letzterer ist gegeben durch die CCITT-Empfehlung E.164, den allgemein gültigen Numerierungsplan für das Gebiet diensteintegrierter digitaler Fernmeldenetze ISDN. Der Wert im Unterfeld Adresstyp gibt an, ob es sich um eine individuelle oder eine Gruppenadresse handelt. Die erläuterte Struktur ist also auch gültig für individuell adressierte PDU, an Stelle der GAP - der Unterschied liegt einzig in der im Adresstypfeld enthaltenen Information. Die Quellenadresse im Quellenadressfeld 13 der GPA ist immer eine individuelle Adresse und bezeichnet eine bestimmte Schnittstelle, über welche ein Benützer Zugang zu den Diensten erlangt. Im Zieladressfeld 12 steht im vorliegenden Fall eine Gruppenadresse. Im Kapselkopf 5 sind an den entsprechenden Stellen die Zieladresse der gekapselten PDU, DAe, und deren Quellenadresse, SAe, vorhanden. Innerhalb eines Teilnetzes können die PDU (mit der Zusatzinformation 8 versehen) ungekapselt verkehren, eine Kapselung ist aber nicht ausgeschlossen. Für den Transport zwischen den Teilnetzen jedoch, die unterschiedliche Besitzer haben, ist ein Einkapseln der PDU - obwohl nicht unabdingbar - vom Protokoll her zwingend vorgesehen. Die Zieladresse DAe ist dann entweder die Adresse des Empfängers im angesprochenen Teilnetz oder die Gruppenadresse. Der Empfänger kann allerdings ein Netzelement sein, das Dienste für das Netz erbringt, im hier interessierenden Fall zum Beispiel das Kopieren und Verteilen von Datenblöcken mit Gruppenadressierung vornimmt. Im Zellabschnitt mit den Diensteparameterfeldern 14 sind zwei Oktette Reserve 17 vorhanden. Diese unterliegen keiner Integritätsprüfung und können daher auch in gekapselten PDU verändert werden.

Weitere Details zur Datenstruktur der PDU sind an dieser Stelle nicht von Interesse.

Die Gruppenadressierung (genauer: die Vermittlung von Dateneinheiten von einer Quelle an mehrere, als Gruppe definierte, an verschiedene Teilnetze eines Breitbandnetzes angeschlossene Benützer) basiert darauf, dass jeder Benützer über eine eindeutige Nummer ansprechbar ist, und dass Elemente der Teilnetze Funktionen wahrnehmen, die eine Verteilung an eine Gruppe ermöglichen: Verwalten der Gruppenzusammensetzung sowie Duplizieren und Neuadressieren von PDU. Bei der Implementierung ist jedoch den Anforderungen Rechnung zu tragen. Einerseits muss strikte verhindert werden, dass eine Dateneinheit doppelt zum selben Emfänger gelangt, andererseits soll die Verteilung innert nützlicher Frist erfolgen, aber ohne das Netz ungebührlich zu belasten. So sollen alle für den Verteilprozess notwendigen Schritte auf Grund der ersten Zelle möglich sein ("on the fly processing"), gleichzeitig aber bei jedem Netzzugang unberechtigte Benützer zurückgewiesen werden können. Die zulässige Zahl von Mitgliedern einer Gruppe ist ebenso beschränkt wie die mögliche Anzahl von Gruppen.

Die Figur 2 zeigt das Modell eines Netzes der einleitend geschilderten Art, mit Teilnetzen (inklusive "connectionless server") in den Knoten N1 bis N13 und Netz-Netz-Verbindungen als Knotenverbindungen C1 bis C20. Andeutungsweise sind an den Knoten N5 und N6 Netzanschlüsse von Teilnehmern in Form von Benützerschnittstellen U1 bis U3 gezeichnet. Derartige Anschlüsse sind an den verschiedenen Teilnetzen zahllos vorhanden. Jede Schnittstelle hat global eine eindeutige Nummer gemäss dem Numerierungsplan der CCITT-Empfehlung E.164. Eine bestimmte Auswahl unter ihnen definiert eine Teilnehmergruppe. Im gezeichneten Beispiel seien an die Knoten N1 bis N3, N5, N6, N8, N9 und N12 Gruppenmitglieder angeschlossen. Diese Knoten sind daher hervorgehoben. Ferner sei in einer nicht gezeichneten Fortsetzung des Netzes, das über die Verbindung C12 zum gezeichneten Netz gehört, mindestens ein weiterer Gruppenteilnehmer angeschlossen. Ein möglicher Verbindungsbaum für eine Gruppe, der alle Knoten mit Anschlüssen dieser Gruppenmitglieder umfasst, ist durch die fett gezeichneten Knotenverbindungen C1-C6, C4-C12, C2-C7-C14, C15-C20 und C17 gegeben. Alternative Festlegungen wären möglich gewesen, zum Beispiel C14-C19 und C15 an Stelle von C14 und C15-C20 oder - sehr einschneidend - C13 an Stelle von C2-C7. Ausgezeichnet sind nach dieser Festlegung die "Blätter" des Baums, das heisst die Endknoten N1, N3, N5 und N8. Erst durch freie Wahl wird aus den verbleibenden Knoten der Stammknoten definiert, hier mit N12 angenommen. Im Teilnetz des Stammknotens ist das Netzelement angesiedelt, das spezielle Funktionen im Zusammenhang mit dem Verteilungsprozess bei Gruppenadressierung ausübt; es wird Gruppenadressenagent, GAA, genannt. Der GAA übernimmt insbesondere die Verwaltung der Gruppenmitglieder und des Verbindungsbaums. Der Verbindungsbaum ist für jede Gruppe einzeln definiert - für eine nächste Gruppe kann er ganz anders aussehen. Ein und derselbe Knoten gehört in der Regel zu mehreren Verbindungsbäumen.

Da im Netz auch Teilnehmer, die nicht Gruppenmitglieder sind, gruppenadressierte Protokoll-Informationseinheiten senden dürfen, muss jeder Knoten im Netz, im Beispiel der Figur 2 auch N13, zumindest in der Lage sein, eine gruppenadressierte PDU einzukapseln und in Richtung des Stammknotens dieser Gruppe wegzuschicken. Um eine effiziente Verteilung zu erreichen, müssen allerdings die zum Verbindungsbaum gehörenden Knoten mehr beitragen, als die PDU lediglich an den Stammknoten weiterzuleiten. Alle an ein und demselben Knoten angeschlossenen Gruppenmitglieder bilden eine Untergruppe. Das Netzelement, das im Zusammenhang mit der Gruppenadressierung eine besondere Funktion ausübt, wird in der Folge Untergruppenadressenagent, kurz UGAA genannt. Der UGAA kopiert nicht gekapselte gruppenadressierte PDU so oft wie nötig. Ferner kapselt er die GAPn, die als Zieladresse DAn die Gruppenadresse enthält, versieht sie dabei mit der Zieladresse DAe im benachbarten Teilnetz und verschickt diese GAPe dorthin.

Eine effiziente Verteilung ergibt sich, wenn in jedem Knoten des Verbindungsbaums der Gruppe, in dem eine GAPn oder eine GAPe ankommt, einerseits die allenfalls angeschlossenen Gruppenmitglieder direkt mit dem GAPn bedient werden, andererseits - im Unterschied zum Verfahren mit Bündel-Gruppenadressierung - alle benachbarten Knoten des Verbindungsbaums eine GAPe erhalten; von der Verteilung ausgenommen ist dabei immer die Quelle, von der die GAP stammte. Da die Wege in einem einmal festgelegten Verbindungsbaum eindeutig gegeben sind, gewährleistet die oben beschriebene topologische Anweisung, dass kein Knoten und kein Teilnehmer doppelt oder gar mehrfach bedient wird. Dem Stammknoten mit dem GAA kommt dabei keine besondere Stellung zu, er behält jedoch eine solche bezüglich der Verwaltung der Gruppenmitglieder und des Verbindungsbaums. Von ihm aus gehen die Anweisungen an die UGAA, wenn Aenderungen vorzunehmen sind. Eine weitere Vereinbarung ist jedoch für Knoten zu treffen, die nicht zum Verbindungsbaum gehören, wie etwa N13 in der Figur 2. Eine GAP, die von einem nicht zur Gruppe gehörenden Teilnehmer stammt und über einen nicht zum Verbindungsbaum gehörigen Knoten (N13) ins Netz gelangt, darf von diesem nur in einer Richtung (über C9) mit der Zieladressedes GAA im Verbindungsbaum weitergegeben werden.

Für eine derartige Verteilung unter Beachtung der weiter oben erwähnten Anforderungen bezüglich Schnelligkeit und Sicherheit ist jedoch in den Zellköpfen nicht genügend Platz für die notwendige Information vorhanden. Folgende Angaben stehen den Knoten im Verbindungsbaum zur Verfügung und haben den aufgeführten Zweck:
- Zieladresse des UGAA, als DAe; Transport des GAPe an den gewünschten Empfänger, hier das Netzelement, das für die Bearbeitung innerhalb eines Teilnetzes zuständig ist. Zur Einhaltung der Verteilungsvorschrift kann immer nur der nächstliegende UGAA addressiert werden.
- Quellenadresse des UGAA, als SAe; Festhalten des erstbearbeitenden UGAA.
- Quellenadresse des Benützers, als SAn oder SAE; Ursprung der Daten. Ermöglicht als SAe die unmittelbare Verwerfung von Datenblöcken Unberechtigter ("end-user blocking on the fly").
- Gruppenadresse, als DAn; Identifikation einer Gruppe. Individuelle Adresse des GAA.
Es ergibt sich ein Konflikt bezüglich der Quellenadresse im Kapselkopf. Erfindungsgemäss wird dieser gelöst, indem die Quellenadresse des UGAA ersetzt wird.

Eine Analyse der auszuführenden Operationen zur Durchführung der angestrebten Art der Verteilung, insbesondere bezüglich der chronologischen Reihenfolge der Schritte, zeigt einerseits die Notwendigkeit, die Quellenadresse des Benützers als SAe in den Kapselkopf zu schreiben, andernfalls ist die Verwerfung von PDU unberechtigter Quellen "on the fly" nicht möglich. Andererseits wird eine Verteilung von einem UGAA aus erst ausgeführt, nachdem feststeht, dass er als solcher korrekt und zu Recht adressiert wurde, wozu im Internetzverkehr mit gekapselten PDU die Zieladresse des UGAA im Kapselkopf stehen muss. Da ein UGAA mehrerern Gruppen dienen kann, sagt die UGAA-Adresse nichts eindeutiges aus über die Gruppe, die angesprochen ist. Für die Verteilung muss daher jedenfalls auf die Information im GAPn-Kopf abgestellt werden. Es genügt daher, die Information über den Laufweg der Dateneinheit in der GAPn mitzuführen. Hier allerdings ist die Quellenadresse SAn unveränderbar durch jene des Benützers belegt, der die GAP aussendete.

Wie bei der Beschreibung zur Figur 1 erwähnt, stehen im Kopf 9 der GAPn 7 zwei Oktette Reserve 17 zur Verfügung, die beim kapseln verändert werden können. Diese werden erfindungsgemäss dazu benützt, den sendenden UGAA zu identifizieren. Weil die Verteilung einer GAP auf ein stabiles Netz angewiesen ist, in dem die Beziehungen zwischen den UGAA für eine bestimmte Gruppe fest gegeben und bekannt sind, genügt es, jedem UGAA pro Gruppe eine lokal eindeutige Nummer zuzuordnen. Für diese Zuordnung besteht keinerlei Einschränkung, ausser dass sie eindeutig erfolgt und den Rahmen der zur Verfügung stehenden 16 Bit nicht sprengt. Eine solch eindeutige Zuordnung ist in der Figur 2 implizite bereits erfolgt. In jedem Teilnetz, das in der Figur als Knoten dargestellt ist, der zum Verbindungsbaum gehört, ist genau ein als UGAA bezeichnetes Netzelement angesiedelt. Diesem ist nebst seiner global eindeutigen Nummer, die jeweils als Zieladresse DAe benötigt wird, eine lokale Nummer zugeteilt, die in der Figur mit der Zahl der Knotenbezeichnung übereinstimmt. Die lokale Adresse des UGAA im Knoten N6 ist also 6, jene des UGAA im Knoten N9 ist 9 usw. Die 12 bezeichnet den Gruppenadressenagenten GAA. N4, N10 und N13 passen zwar in das lokale Numerierungsschema und die Nummern 4, 10 und 13 könnten als lokale UGAA-Adressen für eine andere Gruppe so verwendet werden, gehören für die betrachtete Gruppe aber nicht zu den einbezogenen UGAA.

Die lokale Nummer des UGAA wird jeweils als Absenderadresse in die zwei Oktette Reserve 17 des Diensteparameterfeldes 14 des Kopfs 9 der GAPn 7 geschrieben (Fig. 1). Die globale Nummer des UGAA wird in der GAPn nicht mitgeführt. Da der Verbindungsbaum eindeutig ist und jeder UGAA eine GAP an alle benachbarten UGAA der Gruppe schickt, ausser an den Absender, braucht der erstbehandelnde UGAA nicht mitgeführt zu werden.

Als Beispiel, das die Funktionsweise im Zusammenhang detailliert illustriert, wird davon ausgegangen, ein Benützer am Knoten N5, aber nicht jener an der Schnittstelle U1, setze eine GAP ab. Es ist unerheblich, ob er zur Gruppe gehört oder nicht. Die abgesetzte GAPn enthält als DAn die Gruppenadresse GA und als SAn die individuelle Adresse des sendenden Benützers.

Die GA als Zieladresse bewirkt im Teilnetz N5 eine Vermittlung der GAPn an den Untergruppenadressenagenten UGAA5. Dieser erkennt auf Grund ihm vorliegender Instruktionen, die er vorgängig beim Konfigurieren der Gruppe vom GAA in dessen Eigenschaft als Verwalter erhalten hat, dass es sich um eine gruppenadressierte PDU handelt, die er auf bestimmte Weise bearbeiten muss. Zunächst identifiziert er auf Grund der Quellenadresse SAn den Benützer und entscheidet, ob dieser zu blockieren sei. Falls ja, verwirft er die GAP, andernfalls folgt die lokale Vermittlung an die Mitglieder der Untergruppe und die Weitergabe an die benachbarten Knoten, im Beispiel nur an den Knoten N6.

Für die lokale Verteilung kopiert der UGAA5 die GAPn und schickt sie individuell an die Benützerschnittstelle von Mitgliedern der Untergruppe, im Beispiel an U1; diesen Vorgang wiederholt er so oft, bis alle Untergruppenmitglieder bedient sind. Kam der Datenblock ursprünglich von einem Benützer, der Mitglied der Untergruppe ist, erhält er keine Kopie.

Für die Weitergabe an den Knoten 6 schreibt der UGAA5 seine lokal eindeutige Nummer 5 in die zwei Oktette Reserve und kaspeslt darauf das GAPn unter Hinzufügen der individuellen Adressse des NGAA6 als Zieladresse DAe und der Kopie der Quellenadresse SAn als Quellenadresse SAe im Kapselkopf ein.

Die nächstfolgende Bearbeitung des GAPe im UGAA6 des Knotens N6 umfasst folgende Schritte:
1. Die erste Zelle wird bearbeitet. Der UGAA6 stellt auf Grund von DAe fest, dass er angesprochen ist, und auf Grund von SAe, der Benützer-Quellenadresse, dass keine Blockierung erfolgen muss - andernfalls würde die Bearbeitung hier abgebrochen. Die erste Zelle wird in der Folge nicht mehr weiter benötigt.
2. Die verbleibende GAPn wird behandelt. Auf Grund der Gruppenadresse im Feld der Zieladresse DAn und den im UGAA vorhandenen Instruktionen steht fest, dass die Benützer U2 und U3 die Untergruppe ausmachen und dass die umliegenden Knoten N2, N3, N5 und N7 zur Gruppe gehören; auf Grund der lokalen Nummer 5 in den zwei Oktetten Reserve wird jedoch der UGAA5 im Knoten N5 als Empfänger ausgeschieden.
3. Die GAPn wird zweimal kopiert und an die Benützerschnittstellen U2 und U3 ausgegeben.
4. Die lokale Nummer in den zwei Oktetten Reserve wird auf 6 gesetzt. Die GAPn wird dreimal kopiert und gekapselt, mit der Benützeradresse SAn als Quellenadresse SAe und je der individuellen Adresse des UGAA2 bzw. UGAA3 bzw. UGAA7 als Zieladresse DAe. Die resultierende GAPe wird an die Knotenverbindung C15 bzw. C17 bzw. C7 ausgegeben.

In den benachbarten Knoten N2, N3 und N7 wiederholen sich die vier Schritte sinngemäss. Im Knoten N3 verbleibt kein zu bedienender Knoten mehr und der Prozess endet dort. In den anderen Knoten geht der Prozess weiter, bis er überall in den Endknoten zum Stehen kommt.

Setzt ein (nicht zur Gruppe gehörender) Benützer am Knoten N13 eine GAP ab, so bewirkt die Gruppenadresse als Zieladresse ein unmittelbares Kapseln mit kopierter Ziel- und Quellenadresse und die Weitergabe an die Knotenverbindung C9 - die GAP wird so an den GAA im Knoten N12 vermittelt. Gleiches geschieht, wenn eine GAP am Knoten N4 abgesetzt wird. Da jedoch der UGAA6 die Gruppenadresse als solche erkennen kann, besteht die Möglichkeit, bereits in N6 mit dem Verteilen zu beginnen.

Eine weitere Verbesserung der Verteilung wird dadurch erreicht, dass der Gruppenadressenagent, GAA, mehrere Knoten in ein und demselben Ast auf direktem Weg adressiert, wobei verschiedene Pfade gewählt werden können. So könnte z. B. eine über den Knoten N9 eingetroffene GAPe vom GAA über die Knotenverbindung C2 an den Knoten 7, hingegen über die Knotenverbindungen C3-C9-C18, also über die Knoten N10 und N13, an den Knoten N3 adressiert sein. Dies hat den Vorteil, kostengünstige Verbindungen wählen zu können, oder bei Verbindungsunterbrüchen den Dienst aufrecht erhalten zu können, ohne den Verbindungsbaum ändern zu müssen. Selbstverständlich muss dabei die Information mitgeliefert werden, welche die Verteilung am richtigen Ort stoppt. Hierfür können ebenfalls die zwei Oktette Reserve benützt werden.

Als weiterer Vorteil der beschriebenen Lösung ist zu erwähnen, dass sie nicht an das Kapseln der PDU im Internetzverkehr gebunden ist. Die GAP können als GAPn an die benachbarten Knoten gesandt werden, sofern dies vom Protokoll her erlaubt ist. Der UGAA kann den oben beschriebenen ersten Schritt auch auf Grund der Gruppenadresse statt der UGAA-Zieladresse tun - die Quellenadressen sind bei GAPe und GAPn ohnehin identisch. Die weiteren Schritte sind dann sowieso von der Information im Kapselkopf unabhängig.

## Patentansprüche

1. Verfahren zur Vermittlung gruppenadressierter Datenblöcke in einem Netz bestehend aus Teilnetzen als Knoten und Netz-Netz-Verbindungen als Knotenverbindungen des Netzes, mit einem virtuellen Verbindungsbaum, der alle Knoten enthält, an die Benützer einer definierten Gruppe angeschlossen sind, wobei die am selben Knoten angeschlossenen Benützer eine Untergruppe bilden, dadurch gekennzeichnet, dass eine Verteilung von gruppenadressierten Protokoll-Informationseinheiten durch Kopien vom ersten Knoten des Verbindungsbaums aus an alle Benützer der Untergruppe mit Ausnahme der Quelle, sofern diese Gruppenmitglied ist, und an alle benachbarten Knoten erfolgt, und ferner in jedem Knoten an alle Benützer der entsprechenden Untergruppe und an alle benachbarten Knoten, mit Ausnahme des Knotens, von dem die gruppenadressierte Protokoll-Informationseinheit ankam.

2. Verfahren nach Anspruch 1, wobei in jedem Knoten des Verbindungsbaums ein ausgewähltes Netzelement, das an der Verteilung der gruppenadressierten Protokoll-Informationseinheiten beteiligt ist, als Untergruppenadressenagent wirkt, dadurch gekennzeichnet, dass jedem Untergruppenadressenagenten eine lokale, eindeutige Nummer zugeteilt ist, die als Absenderidentifikation der gruppenadressierten Protokoll-Informationseinheit an den nächsten Knoten mitgegeben wird.

3. Verfahren nach Anspruch 2, dadurch gekennzeichnet, dass die lokale, eindeutige Nummer im Kopf der Protokoll-Informationseinheit in zwei Oktetten Reserve transportiert wird, die keiner Integritätsprüfung unterliegen.

4. Verfahren nach Anspruch 2, dadurch gekennzeichnet, dass für eine Implementierung der Gruppe einer der Untergruppenadressenagenten als Gruppenadressenagent ausgezeichnet ist, der alle Gruppenmitglieder und den zugehörigen Verbindungsbaum verwaltet und die Untergruppenadressenagenten mit den erforderlichen Informationen aufdatiert.

5. Verfahren nach Anspruch 4, dadurch gekennzeichnet, dass der Gruppenadressenagent im Stammknoten des Verbindungsbaums angesiedelt ist.

6. Verfahren nach Anspruch 4, dadurch gekennzeichnet, dass der Gruppenadressenagent gruppenadressierte Protokoll-Informationseinheiten direkt an mehrere individuell adressierte Untergruppenadressenagenten schickt, wobei die gruppenadressierte Protokoll-Informationseinheit Zusatzinformationen über die Verteilung mittransportiert.

7. Verfahren nach Anspruch 1, dadurch gekennzeichnet, dass die für den Transport über Knotenverbindungen gekapselte gruppenadressierte Protokoll-Informationseinheit im Kapselkopf als Quellenadresse die individuelle Adresse des sendenden Benützers mitführt, wodurch jeder Knoten auf Grund der Bearbeitung der ersten Zelle des Datenblocks zu prüfen in der Lage ist, ob eine Zugangsberechtigung gegeben ist.
